Europäisches Patentamt

European Patent Office

Office européen des brevets

(19)

(11) Veröffentlichungsnummer: **0 036 601**
**A2**

(12) **EUROPÄISCHE PATENTANMELDUNG**

(21) Anmeldenummer: 81101937.1

(22) Anmeldetag: 16.03.81

(51) Int. Cl.³: **H 01 G 9/04**

(30) Priorität: 26.03.80 DE 3011702

(43) Veröffentlichungstag der Anmeldung: 30.09.81
**Patentblatt 81/39**

(84) Benannte Vertragsstaaten: **FR GB SE**

(71) Anmelder: **SIEMENS AKTIENGESELLSCHAFT** Berlin
und München, Postfach 22 02 61,
**D-8000 München 22 (DE)**

(72) Erfinder: **Richter, Gerhard, Dr., An der Lauselche 30,
D-8520 Erlangen (DE)**

(54) **Doppelschichtkondensator.**

(57) Die Erfindung betrifft einen Doppelschichtkondensator mit Elektroden aus Kohlenstoff und stellt sich die Aufgabe, einen derartigen Kondensator in der Weise auszugestalten, dass damit sowohl eine Spannung über 1 V erzielt als auch eine hohe Elektrodenkapazität mit geringer Frequenzabhängigkeit erreicht werden kann. Die Erfindung sieht dazu Elektroden vor, die aus durch Pyrolyse von Filmen oder Folien aus nichtschmelzbaren Kunststoffen hergestelltem Glaskohlenstoff bestehen. Der erfindungsgemässe Doppelschichtkondensator eignet sich insbesondere zur Erzeugung von hohen volumenbezogenen Kapazitäten.

SIEMENS AKTIENGESELLSCHAFT
Berlin und München

Unser Zeichen
VPA   80 P 7518   E

## Doppelschichtkondensator

Die Erfindung betrifft einen Doppelschichtkondensator mit Elektroden aus Kohlenstoff.

Doppelschichtkondensatoren, die zu den elektrochemischen Kondensatoren gehören, zeichnen sich durch eine hohe Energiedichte aus. In diesen Kondensatoren wird nämlich die hohe Flächenkapazität einer elektrochemischen Doppelschicht ausgenutzt, die etwa 20 $\mu F \cdot cm^{-2}$ beträgt. Durch eine Aufrauhung der Oberfläche kann die Flächenkapazität sogar noch weiter erhöht werden. Die größten Rauhigkeitsfaktoren erreicht man dabei mit mikroporösen Systemen, wie Aktivkohle.

Ein Nachteil der Doppelschichtkondensatoren ist ihre niedrige Spannung: Bei der Verwendung wäßriger Elektrolyte darf pro Zelle eine Spannung von 1,2 V nicht überschritten werden. Das Fehlen einer dielektrischen Schicht, an der die Spannung abfällt, bewirkt nämlich, daß oberhalb einer Zellspannung von 1,2 V die Zersetzung von Wasser einsetzen würde. Um Spannungen über 1,2 V in einer Einheit zu erreichen, ist deshalb eine Serienschaltung mehrerer Zellen erforderlich. Diese Hintereinanderschaltung erfolgt zweckmäßigerweise mit bipolaren Elektroden.

Elektroden aus Kohle, wie sie für Doppelschichtkondensatoren bereits bekannt sind (DE-OS 19 21 610 und 20 31 798), sind bei bipolaren Anordnungen nicht anwendbar, weil sie porös und somit elektrolytdurchlässig sind. Es würden hierbei dann Elektrolytwege gebildet

Bh 2 Koe / 20.3.1980

werden, an denen Spannungen über 1,2 V anliegen. Die Gasentwicklung infolge Wasserzersetzung würde dann zu einer Zerstörung des Kondensators führen. Andererseits bringt die Verwendung von Trennscheiben, wie metallischen Scheiben, eine Verteuerung und eine Vergrößerung der Kondensatoren bzw. eine Korrosionsgefahr mit sich. Bei den bekannten Kondensatoren kann darüber hinaus die hohe Kapazität nur bei Frequenzen, die weit unter der Netzfrequenz liegen, genutzt werden.

Aufgabe der Erfindung ist es, einen Doppelschichtkondensator der eingangs genannten Art in der Weise auszugestalten, daß sowohl eine Spannung über ca. 1 V erzielt als auch eine hohe, bei Netzfrequenz verfügbare Elektrodenkapazität erreicht werden kann.

Dies wird erfindungsgemäß dadurch erreicht, daß die Elektroden aus durch Pyrolyse von Filmen oder Folien aus nichtschmelzbaren Kunststoffen hergestelltem Glaskohlenstoff bestehen.

Da der erfindungsgemäße Doppelschichtkondensator Elektroden aufweist, die vollkommen flüssigkeitsdicht sind, läßt sich eine Gasentwicklung vermeiden, so daß - bei bipolarer Anordnung - Spannungen über 1,2 V in einem kleinen Volumen erreicht werden können. Da diese Elektroden, zu deren Herstellung Kunststoffilme bzw. -folien dienen, außerdem sehr dünn, dabei aber gleichmäßig stark sind, kann auch die hohe Flächenkapazität des Glaskohlenstoffs gut ausgenutzt werden.

Zur Ausnutzung der hohen Flächenkapazitäten ist ein sehr niedriger Innenwiderstand erforderlich. Soll der Kondensator bei Netzfrequenz glättend wirken, so muß - bei der Netzfrequenz von 50 Hz - der Verlustfaktor

$$\mathrm{tg}\,\delta = \omega RC = 2\pi\nu RC < 1 \text{ sein } (\nu = \text{Frequenz}). \text{ Da}$$

Flächenkapazitäten zwischen 0,1 und 0,5 $F \cdot cm^{-2}$ erreichbar sind, müssen die Flächenwiderstände zwischen 6 und 30 $m\Omega \cdot cm^2$ liegen. Dabei ist immer der kleinstmögliche Widerstand anzustreben, um einen möglichst niedrigen Verlustfaktor bei hoher Frequenz zu erhalten.

Der spezifische Widerstand von Elektrolyten mit hoher Leitfähigkeit, wie Schwefelsäure oder Kalilauge, liegt bei Raumtemperatur zwischen 1 und 2 $\Omega \cdot cm$. Dies bedeutet, daß ein Flächenwiderstand von 6 $m\Omega \cdot cm^2$ einem Elektrodenabstand zwischen 30 und 60 $\mu$m entspricht. Um innere Kurzschlüsse zu vermeiden, muß sich deshalb zwischen den Elektroden ein Abstandhalter befinden, der als poröse Membran aus hydrophilen Filmen, wie Ionenaustauschermembranen, oder als Diaphragma, beispielsweise aus Asbest, ausgebildet sein kann oder auch aus einem Abstandsmuster aus Kunststoff, beispielsweise Gießharz, das auf eine Elektrode aufgedruckt ist, bestehen kann.

Abstandhalter erhöhen aber den spezifischen Widerstand um einen Faktor etwa zwischen 2 und 10, so daß der Elektrodenabstand in Wirklichkeit noch kleiner gemacht werden muß. Angestrebt werden deshalb Elektrolytraumdicken zwischen 10 und 20 $\mu$m. Bei diesen kleinen Abständen müssen aber auch die Elektrodenoberflächen sehr gleichmäßig und eben sein. Die Unebenheiten und Rauhigkeiten sollen möglichst unter 10 $\mu$m liegen. Derartige gleichmäßige Oberflächen sind aber bei Glaskohlenstoffplatten der üblichen Art, die durch Gießen hergestellt werden, nicht zu erzielen.

Dünne, gleichmäßig starke Glaskohlenstoffelektroden mit geringen Unebenheiten und Rauhigkeiten erhält man dagegen durch Pyrolyse, d.h. Carbonisieren, von Filmen oder Folien aus Kunststoffen. Vorteilhaft werden die Filme und Folien dabei in der Weise pyrolysiert, daß sie ihre Form behalten, beispielsweise also unter Zugbelastung. Bei derart hergestellten Elektroden bleiben die Schwankungen der Foliendicke und die Oberflächenrauhigkeit unter 10 $\mu$m. Der Abstand zwischen den Elektroden, der durch deren Rauhigkeit und Unebenheit begrenzt ist, kann deshalb sehr klein gehalten werden. Auf diese Weise wird ein niedriger Innenwiderstand erreicht, so daß der Verlustfaktor tg $\delta$ bei Netzfrequenz unter 1 bleibt und die hohe Flächenkapazität - bei Netzfrequenz - ausgenutzt werden kann.

Die zur Herstellung der Elektroden eingesetzten Filme und Folien müssen aus nichtschmelzbaren Kunststoffen bestehen und sollten bei der Pyrolyse einen möglichst hohen Kohlenstoffanteil zurücklassen. Die Elektroden des erfindungsgemäßen Doppelschichtkondensators können deshalb vorteilhaft aus vernetzten Kunststoffen hergestellt werden. Bevorzugt werden dabei Filme oder Folien aus vernetzten Duromeren, wie Phenolformaldehyd- oder Furanharze. Vorteilhaft können aber auch unvernetzte Kunststoffe eingesetzt werden, die bei der thermischen Behandlung, d.h. der Pyrolyse, vernetzen bzw. zunächst durch cyclisierende Vernetzung in eine unschmelzbare Form übergeführt und dann pyrolysiert werden. Als derartige Kunststoffe werden vorzugsweise Polyimide, Polyacrylnitril und Polyacrylamid eingesetzt. Der Begriff "Polyimide" umfaßt dabei auch Polyamidimide und Polyesterimide. Bevorzugt werden aromatische Polyimide verwendet. Besonders glatt bleiben Folien aus Polyacrylnitril, wenn sie vor der Pyrolyse gereckt worden sind. Sowohl Polyacrylnitril als auch Polyimide bilden während des Aufheizens die Vernetzungsbrücken und hinterlassen bei der Pyrolyse einen hohen Kohlenstoffanteil, d.h. einen hohen Prozentsatz an Glaskohlenstoff; sie liefern darüber hinaus - ebenso wie vernetzte Kunststoffe - porenfreie und damit dichte Folien bzw. Filme aus Glaskohlenstoff. Die zur Pyrolyse eingesetzten Kunststoff-
Filme bzw. -Folien können ferner vorteilhaft aus
sogenannten Leiterpolymeren oder Halb-Leiterpolymeren
bestehen.

Besonders vorteilhaft ist es, wenn die Filme oder
Folien aus den nichtschmelzbaren Kunststoffen unter
Zugbelastung pyrolysiert werden, gegebenenfalls nach
einem vorangegangenen Reckvorgang. Bei einem derartigen
Vorgehen behalten die Filme und Folien nämlich ihre
gleichmäßige Dicke und verwerfen sich bei der Pyrolyse
nicht.

Die Herstellung der Elektroden aus Filmen bzw. Folien
hat auch den wirtschaftlichen Vorteil eines geringen
Preises: Das Ausgangsmaterial ist preiswert zu erhalten
und der Pyrolyseprozeß ist in rationeller Weise durchführbar. Dünne Filme und Folien können nämlich schnell
pyrolysiert werden, weil die Geschwindigkeit des
Pyrolyseprozesses durch die Dicke des Materials begrenzt
wird, da die Zersetzungsprodukte abdiffundieren müssen;
die Pyrolysezeit erhöht sich daher mit $d^2$ (d = Dicke
der Folie). Bei dünnen Filmen und Folien können die
Reaktionsprodukte aber leicht nach außen abgegeben
werden.

Der erfindungsgemäße Doppelschichtkondensator weist
den weiteren wesentlichen Vorteil einer hohen volumenbezogenen Kapazität auf. Da dieser Doppelschichtkondensator mit Elektroden aus dünnen Filmen bzw. Folien nämlich ein geringes Totvolumen besitzt, weil hierbei 0,1
bis 0,2 mm dicke Folien und Filme die gleiche Flächenkapazität erlauben wie sonst 1 mm starke Elektroden,
kann die Ladungs- bzw. Energiedichte des Kondensators
beispielsweise um einen Faktor in der Größenordnung von
5 erhöht werden.

Als weiterer Vorteil des erfindungsgemäßen Doppelschichtkondensators ergibt sich, daß hierbei eine gute Wärmeableitung erfolgt. Die im Kondensator auftretenden Verluste müssen als Wärme über die beiden äußeren Kontaktflächen abgeführt werden. Die Wärmeabfuhr bei Kondensatoren mit dünnen Folien als Elektroden erfolgt aber leichter und schneller als bei relativ dicken Scheiben. Der erfindungsgemäße Kondensator kann somit - bei gleicher Temperaturbegrenzung - höher belastet werden als übliche Kondensatoren, wobei die zulässige Höchsttemperatur natürlich durch den Elektrolyten vorgegeben ist.

Um eine hohe Elektrodenkapazität mit geringer Frequenzabhängigkeit verfügbar zu machen, ist es erforderlich, eine hohe Mikroporosität in einer möglichst dünnen Schicht unterzubringen, weil das Innere der Poren nur über den zusätzlichen Widerstand des Elektrolyten in den Poren zugänglich wird. Die Frequenzabhängigkeit der Kapazität macht sich um so stärker bemerkbar, je dicker die mikroporöse Schicht ist. Beim erfindungsgemäßen Doppelschichtkondensator werden deshalb vorteilhaft Elektroden aus aktiviertem Glaskohlenstoff eingesetzt, d.h. Elektroden, bei denen durch eine Aktivierung gleichmäßige, dünne, mikroporöse Schichten erzeugt wurden. Die Aktivierung erfolgt dabei bevorzugt in oxidierender Gasatmosphäre bei Temperaturen etwa zwischen 400 und 1200°C (vgl. dazu die gleichzeitig eingereichte europäische Patentanmeldung "Doppel-schichtkondensator", Nr. .........., VPA 80 P 7519 E). Darüber hinaus kann die Aktivierung auch in konzentrierter Schwefelsäure bei Temperaturen bis zu ca. 330°C vorgenommen werden (deutsche Offenlegungsschrift 28 42 352).

Anhand von Beispielen soll die Erfindung noch näher
erläutert werden.

Eine gereckte Folie aus Polyacrylnitril mit einer Dicke
von 0,2 mm (Breite: 5 cm; Länge: 2 x 30 cm) wird in
einem 2 m langen Rohrofen ausgespannt und zunächst an
der Luft auf eine Temperatur von ca. 300°C und dann in
einer Stickstoffatmosphäre mit einer Aufheizrate von
40°C/h auf eine Temperatur von ca. 1100°C gebracht. Bei
dieser Temperatur wird der Ofen abgeschaltet. Wenn die
Temperatur auf ca. 500°C abgesunken ist, wird der Stickstoff durch Luft verdrängt und die Temperatur für eine
halbe Stunde bei 500°C gehalten. Danach läßt man den
Ofen ganz abkühlen und nimmt dann die Probe heraus.

Die erhaltene Glaskohlenstoffolie wird mit einer Diamantsäge in Stücke von 5 cm Länge geschnitten. Diese Stücke
werden abwechselnd mit 20 /um dickem Asbestpapier aufeinandergestapelt. Die äußeren Elektroden werden kontaktiert und der Stapel von insgesamt acht Elektroden wird
dann am Rand mit Epoxidharz vergossen, wobei ein kleiner
Schlitz offen bleibt. Nach dem Aushärten des Gießharzes
wird der Stapel in Vakuum gebracht und - nach dem
Evakuieren - mit 6 n KOH gefüllt. Schließlich wird
auch noch die Einfüllöffnung mit Gießharz vergossen.

Die Messung ergibt an einem derartigen Doppelschichtkondensator einen Innenwiderstand von 18 m$\Omega$ , eine Kapazität von 0,20 F bei 1 Hz und einen Verlustfaktor tg $\delta$ =
1 bei 50 Hz und einer Spannung von 6 V.

Zum Vergleich werden aus Furanharz hergestellte Glaskohlenstoffplatten mit einer Dicke von 1 mm, die Unebenheiten im Bereich von 0,1 bis 0,2 mm besitzen, zum Aufbau eines Doppelschichtkondensators verwendet. Ein
Kondensator aus acht kreisrunden derartigen Scheiben von

0036601

5 cm Durchmesser, die ebenfalls 0,5 h bei 500°C an Luft oxidiert und in der vorstehend beschriebenen Weise zusammengebaut wurden, liefert bei 6 V eine Kapazität von 0,10 F bei 1 Hz, einen Innenwiderstand von 120 mΩ und einen Verlustfaktor tg δ = 1 bei 13 Hz. Während dabei dieser Kondensator mit platten- bzw. scheibenförmigen Elektroden nahezu 1 cm stark ist, weist der erfindungsgemäße Kondensator mit folienförmigen Elektroden eine Dicke unter 2 mm auf. Bei gleicher Spannung ist somit beim erfindungsgemäßen Kondensator eine Kapazität von 0,2 F in einem Volumen von 4 cm$^3$ untergebracht, während bei dem anderen Kondensator für eine Kapazität von 0,1 F ein Volumen von 20 cm$^3$ benötigt wird. Darüber hinaus erfüllt nur der erfindungsgemäße Kondensator die Forderung eines Verlustfaktors von tg δ = 1 bei Netzfrequenz.

Entsprechende Ergebnisse wie bei Polyacrylnitril werden erhalten, wenn andere Kunststoffe zur Elektrodenherstellung eingesetzt werden. Dies gilt beispielsweise für ein aromatisches Polyimid, wie Polydiphenyloxidpyromellithimid, ebenso wie für ein Leiterpolymeres, wie Polyimidazobenzophenanthren. Die Filme bzw. Folien weisen hierbei, ebenso wie in allen anderen Fällen, vorteilhaft eine Dicke zwischen 50 und 500 μm, vorzugsweise von etwa 100 μm, auf.

7 Patentansprüche

Patentansprüche

1. Doppelschichtkondensator mit Elektroden aus Kohlenstoff, d a d u r c h   g e k e n n z e i c h n e t , daß die Elektroden aus durch Pyrolyse von Filmen oder Folien aus nichtschmelzbaren Kunststoffen hergestelltem Glaskohlenstoff bestehen.

2. Doppelschichtkondensator nach Anspruch 1, d a d u r c h   g e k e n n z e i c h n e t , daß die Filme bzw. Folien aus vernetzten Kunststoffen bestehen.

3. Doppelschichtkondensator nach Anspruch 1, d a d u r c h   g e k e n n z e i c h n e t , daß die Filme bzw. Folien aus bei der Pyrolyse vernetzenden Kunststoffen bestehen.

4. Doppelschichtkondensator nach Anspruch 3, d a d u r c h   g e k e n n z e i c h n e t , daß die Filme bzw. Folien aus Polyimiden, insbesondere aromatischen Polyimiden, bestehen.

5. Doppelschichtkondensator nach Anspruch 3, d a d u r c h   g e k e n n z e i c h n e t , daß die Filme bzw. Folien aus Polyacrylnitril oder Polyacrylamid bestehen.

6. Doppelschichtkondensator nach Anspruch 1, d a d u r c h   g e k e n n z e i c h n e t , daß die Filme bzw. Folien aus Leiterpolymeren oder Halb-Leiterpolymeren bestehen.

7. Doppelschichtkondensator nach einem der Ansprüche 1 bis 6, d a d u r c h   g e k e n n z e i c h n e t , daß die Elektroden aus aktiviertem Glaskohlenstoff bestehen.